# EUROPEAN PATENT APPLICATION

(11) **EP 3 481 119 A1**
(43) Date of publication of application: **08.05.2019**
(21) Application number: 17819010.4
(22) Date of filing: 26.05.2017
(51) Int. Cl.: H04W 72/04

(54) **METHOD AND DEVICE FOR ELIMINATING CO-FREQUENCY INTERFERENCE**

(30) Priority: 30.06.2016 CN 201610506660
(71) Applicant: ZTE Corporation, Shenzhen, Guangdong 518057 (CN)
(72) Inventor: WANG, Lingbin, Shenzhen Guangdong 518057 (CN); WU, Feng, Shenzhen Guangdong 518057 (CN); LIU, Qiang, Shenzhen Guangdong 518057 (CN)
(74) Representative: Lavoix
(86) International application number: PCT/CN2017/086061
(87) International publication number: WO 2018/001013

(57) **Abstract**

Provided are a method and device for eliminating co-frequency interference. The method comprises: a base station acquiring a transmission delay between a plurality of base stations adjacent to the base station; the base station receiving a reference signal reception power (RSRP) of a co-frequency adjacent cell reported by a service UE in a current cell; the base station determining, from the co-frequency adjacent cells having an RSRP correspondence in the current cell, a co-frequency adjacent cell, of which the transmission delay is greater than a pre-set threshold, as a candidate adjacent cell; and the base station configuring semi-persistent scheduling (SPS) information configured for the service UE as coordinated multi-point transmission or sending CoMP information, and transmitting same to the candidate adjacent cell, wherein the SPS information is used to indicate that the candidate adjacent cell periodically stops scheduling on a specified resource. The present invention solves the problem in the related art of the absence of how to use the CoMP technology to eliminate the downlink co-frequency interference in the existing network having a large transmission delay, and achieves the effect of improving the throughput of the user and the whole network spectrum utilization.

## Description

### TECHNICAL FIELD

The invention relates to the field of communication, and particularly, to a method and a device for cancelling co-channel interference.

### BACKGROUND

A coordinated multi-point transmission/reception (CoMP) technology is a technology in a long term evolution-advanced (LTE-A) network to improve a cell edge throughput, widen coverage of a high-rate data service and improve a system throughput by reducing or cancelling co-channel interference.

By coordinated scheduling or joint processing between multiple cells, the CoMP technology reduces interference between the cells, improves signal quality of users, improves performance of an edge user and also improves overall performance of a system.

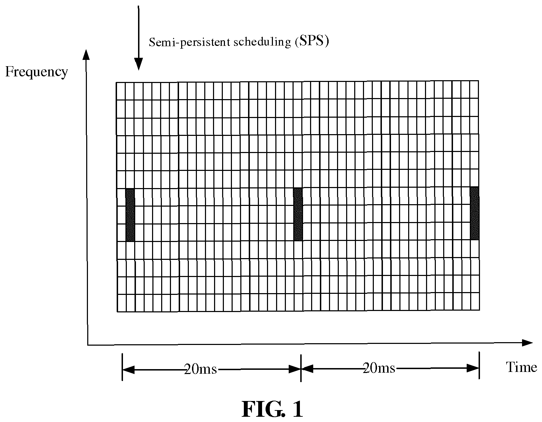

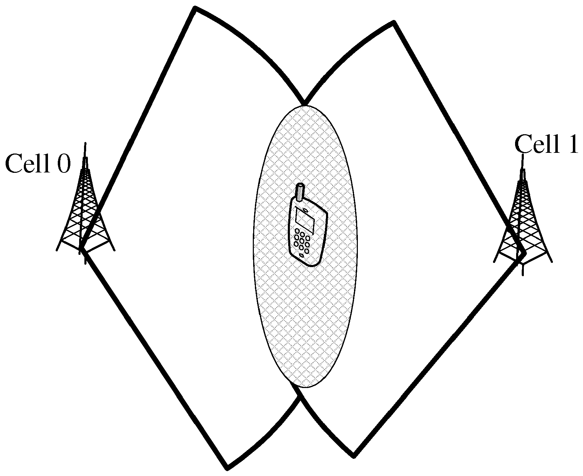

FIG. 1 is a schematic diagram of an application of a CoMP technology according to the related art. As illustrated in FIG. 1, CoMP is an application of a multi input multi output (MIMO) technology in multiple cells. Joint reception is usually adopted for an uplink, and multiple cells or multiple evolved node Bs (eNBs) simultaneously receive and process an uplink signal of the same user, thereby obtaining a reception diversity gain and a power gain. Two typical technologies are adopted for a downlink. One is joint transmission, in which multiple cells or multiple eNBs simultaneously transmit downlink signals from the same user. The other is interference avoidance, when a serving cell sends data, other neighboring cells are silent in the same time-frequency resource. The two CoMP technologies for the downlink can effectively reduce co-channel interference of the same frequency-domain resource of other cells and improve a throughput of an edge user.

A voice over LTE (VoLTE) technology requires no 2nd-Generation (2G)/3rd-Generation (3G) network, in which all services are born in a 4th-Generation (4G) LTE network, thereby unification of data service and voice service in the same network can be implemented, and high-quality voice communication can be provided to users. Specifically, a VoLTE service has a typical periodicity which is usually 20 ms. In an LTE network, a semi-persistent scheduling (SPS) technology is adopted for the VoLTE service, so that a voice user capacity of a system can be significantly improved. When multiple voice users communicate at the same time, a communication delay can be guaranteed better and a voice experience can be improved.

SPS is one of key technologies in a media access control (MAC) layer in an LTE system. In the LTE system, a limit to physical downlink control channel (PDCCH) resources may make the number of users scheduled in a unit time seriously limited. Application of the SPS technology greatly alleviates the problem.

FIG. 2 is a schematic diagram of SPS according to the related art. As illustrated in FIG. 2, an SPS manner refers to that, in a scheduled transmission process of an LTE system, an eNB side performs specific resource authorization by using control information, for example, a resource block (RB), a modulation and coding scheme (MCS), a hybrid automatic repeat reQuest (HARQ) resource, and the like. A user equipment (UE) side periodically uses the authorization until the eNB side cancel the authorization by transmitting specific control information.

Specifically, activation/reactivation of the SPS is performed as follows. The eNB side transmits downlink control information (DCI), according to an LTE protocol, scrambles the transmitted DCI by using an SPS-cell-radio network temporary identifier (SPS-C-RNTI) and sets a specific field to 0. When scrambling and field indication requirements are met, the UE, after receiving the DCI, determines that the authorization is an SPS activation/reactivation authorization and determines that an authorization moment is a starting moment of the SPS authorization. Then, the UE keeps sending and receiving service data according to an agreed period until an authorization cancellation indication is received.

Deactivation of the SPS is performed as follows. In a first manner, like an SPS activation manner, the DCI scrambled by using the SPS-C-RNTI is transmitted, and a specific field is set to be 0 or 1. The UE, after receiving the DCI, determines that the SPS resource authorization is cancelled. In a second manner (only applicable to uplink SPS), several empty data packets (namely with only headers/paddings and 0-bit payload) are continuously sent in an uplink direction to deactivate the SPS.

The SPS technology includes uplink and downlink parts. Enabling may be independently performed in an uplink and may also be independently performed in a downlink. An SPS period: an eNB configures the SPS period of an UE by using radio resource control (RRC) signaling, and it is specified in an LTE protocol that a value of the SPS period includes 10, 20, 32, 40, 64, 80, 128, 160, 320, 640 ms and the like.

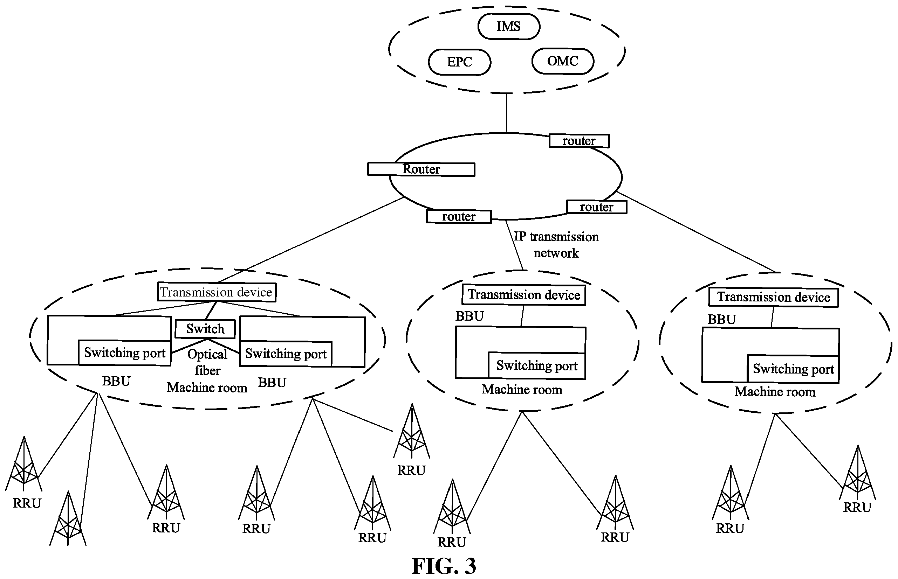

In LTE, the CoMP technology is implemented according to an existing protocol and can well cancel co-channel interference and improve spectrum utilization. However, in the related art, when cancelling downlink co-channel interference by using the CoMP technology, it is effective only based on highly real-time data transmission (shorter than 1ms). A transmission network between eNBs in an existing network is usually a non-ideal packet transport network (PTN). FIG. 3 is a schematic diagram of transmission of distributed macro stations according to the related art. As illustrated in FIG. 3, a delay is about at a 10 ms level. Therefore, although the CoMP technology is good, the application may only be implemented inside an eNB at present and cannot seamlessly cover the whole network. Even though there is a technology capable of supporting CoMP between the eNBs, there is still a delay of at least a few milliseconds, which cannot break the delay level of greater than 10 ms, which greatly reduces high performance of an application of the CoMP in a practical mobile network.

For the problem in the related art of absence of a method for cancelling downlink co-channel interference by use of the CoMP technology in an existing network with a large transmission delay, there is no effective solution at present.

### SUMMARY

Embodiments of the invention provide a method and a device for cancelling co-channel interference, so as to solve at least the problem in the related art of absence of a method for cancelling downlink co-channel interference by use of a CoMP technology in an existing network with a large transmission delay.

According to an aspect of the embodiments of the invention, a method for cancelling co-channel interference is provided, which includes the following operations. An eNB acquires transmission delays between the eNB and multiple eNBs adjacent to the eNB. The eNB receives reference signal received powers (RSRPs) of co-channel neighboring cells reported by a service UE in a present cell. The eNB determines co-channel neighboring cells, which have the transmission delays greater than a preset threshold value, of the co-channel neighboring cells which satisfy a RSRP of the present cell, and determines the co-channel neighboring cells, which have the transmission delays greater than the preset threshold value, as candidate neighboring cells. The eNB configures SPS information configured for the service UE as CoMP information and transmits the CoMP information to the candidate neighboring cells. The SPS information is used to indicate the candidate neighboring cells to periodically stop scheduling in a specified resource.

Optionally, the operation that the eNB acquires the transmission delays between the eNB and the multiple eNBs adjacent to the eNB may include that: the eNB acquires preset transmission delays between the eNB and the multiple neighboring eNBs; or the eNB detects the transmission delays between the eNB and the multiple eNBs adjacent to the eNB.

Optionally, the operations that the eNB determines the co-channel neighboring cells, which have the transmission delays greater than the preset threshold value, of the co-channel neighboring cells which satisfy the RSRP of the present cell, and determines the co-channel neighboring cells, which have the transmission delays greater than the preset threshold value, as the candidate neighboring cells may include that the following actions. The eNB sorts the co-channel neighboring cells corresponding to the RSRPs according to the RSRPs reported by the service UE. The eNB traverses the sorted co-channel neighboring cells and selects the co-channel neighboring cells with the transmission delays greater than the preset threshold value as the candidate neighboring cells.

Optionally, the operation that the eNB configures the SPS information configured for the service UE as the CoMP information and transmits the CoMP information to the candidate neighboring cells may include the following actions. The eNB configures the SPS information for the service UE, the SPS information including at least an RB activated by SPS, an activation moment of the SPS and a period of the SPS. The eNB packs the SPS information and forms the CoMP information. The eNB transmits the CoMP information to the candidate neighboring cells via a PTN. The SPS is used to indicate the candidate neighboring cells to periodically stop, with the period, scheduling in the RB activated by the SPS from the activation moment.

Optionally, the preset threshold value may be 10 ms.

According to another aspect of the invention, a device for cancelling co-channel interference is provided, which is applied to an eNB side and includes: an acquisition module, a receiving module, a determination module and a processing module. The acquisition module is configured to acquire transmission delays between the eNB and multiple eNBs adjacent to the eNB. The receiving module is configured to receive RSRPs of co-channel neighboring cells reported by a service UE in a present cell. The determination module is configured to determine the co-channel neighboring cells, which have transmission delays greater than a preset threshold value, of the co-channel neighboring cells which satisfy a RSRP of the present cell, and determine the co-channel neighboring cells, which have transmission delays greater than the preset threshold value, as candidate neighboring cells. The processing module is configured to configure SPS information configured for the service UE as CoMP information and transmit the CoMP information to the candidate neighboring cells. The SPS information is configured to indicate the candidate neighboring cells to periodically stop scheduling in a specified resource.

Optionally, the acquisition module may include an acquisition unit or a detection unit. The acquisition unit is configured to acquire preset transmission delays between the eNB and the multiple neighboring eNBs. The detection unit is configured to detect transmission delays between the eNB and the multiple eNBs adjacent to the eNB.

Optionally, the determination module may include a sorting unit and a determination unit. The sorting unit is configured to sort the co-channel neighboring cells corresponding to the RSRPs according to the RSRPs reported by the service UE. The determination unit is configured to traverse the sorted co-channel neighboring cells and select the co-channel neighboring cells with the transmission delays greater than a preset threshold value as the candidate neighboring cells.

Optionally, the processing module may include a configuration unit, a processing unit and a transmission unit. The configuration unit is configured to configure SPS information for the service UE, the SPS information including at least an RB activated by SPS, an activation moment of the SPS and a period of the SPS. The processing unit is configured to pack the SPS information and form the CoMP information. The transmission unit is configured to transmit the CoMP information to the candidate neighboring cells via a PTN, SPS being used to indicate the candidate neighboring cells to periodically stop, with the period, scheduling in the RB activated by the SPS from the activation moment.

Optionally, the preset threshold value may be 10 ms.

According to another embodiment of the invention, a storage medium is also provided. The storage medium is configured to store a program code configured to execute the following operations.

Transmission delays between the eNB and multiple eNBs adjacent to an eNB are acquired. RSRPs of co-channel neighboring cells reported by service UE in a present cell are received. The co-channel neighboring cells, which have the transmission delays greater than a preset threshold value, of the co-channel neighboring cells which satisfy a RSRP of the present cell are determined, and the co-channel neighboring cells, which have the transmission delays greater than the preset threshold value, are determined as candidate neighboring cells. SPS information configured for the service UE is configured as CoMP information and transmitted to the candidate neighboring cells, the SPS information being used to indicate the candidate neighboring cells to periodically stop scheduling in a specified resource.

Optionally, the storage medium may be further configured to store a program code configured to execute the following operations.

Preset transmission delays between the eNB and multiple neighboring eNBs are acquired; or transmission delays between the eNB and multiple eNBs adjacent to the eNB are detected.

Optionally, the storage medium may be further configured to store a program code configured to execute the following operations.

According to the RSRPs reported by the service UE, the co-channel neighboring cells corresponding to the RSRPs are sorted. The sorted co-channel neighboring cells are traversed and the co-channel neighboring cells with the transmission delays greater than a preset threshold value are selected as the candidate neighboring cells.

Optionally, the storage medium may be further configured to store a program code configured to execute the following operations.

The SPS information is configured for the service UE, the SPS information including at least an RB activated by SPS, an activation moment of the SPS and a period of the SPS. The SPS information is packed and the CoMP information is formed. The CoMP information is transmitted to the candidate neighboring cells via a PTN. The SPS information is used to indicate the candidate neighboring cells to periodically stop, with the period, scheduling in the RB activated by the SPS from the activation moment.

In the embodiments of the invention, the SPS information is transmitted to the candidate neighboring cells in a CoMP manner. The candidate neighboring cells are neighboring cells which have co-channel interference with the present eNB, satisfy the RSRP of the present eNB and have the transmission delays greater than the preset threshold value. That is, when cancelling downlink co-channel interference by using a CoMP technology, it is also effective even not being based on highly real-time data transmission. The solution of adopting the CoMP technology in a long transmission delay may be implemented by adjusting the preset threshold value, thereby solving the problem of absence of a method for cancelling downlink co-channel interference by use of the CoMP technology in an existing network in a long transmission delay in the related art, and achieving an effect of improving a user throughput and spectrum utilization of the whole network.

### BRIEF DESCRIPTION OF DRAWINGS

The drawings described herein are intended to provide further understanding of the invention and constitute a part of the invention. Schematic embodiments of the invention and descriptions thereof are intended to explain the invention and not intended to unduly limit the invention. In the drawings:
FIG. 1 is a schematic diagram of an application of a CoMP technology according to the related art;
FIG. 2 is a schematic diagram of SPS according to the related art;
FIG. 3 is a schematic diagram of transmission of distributed macro stations according to the related art;
FIG. 4 is a flowchart of a method for cancelling co-channel interference according to an embodiment of the invention; and
FIG. 5 is a structure block diagram of a device for cancelling co-channel interference according to an embodiment of the invention.

### DETAILED DESCRIPTION

The invention will be described below with reference to the drawings and in combination with the embodiments in details. It is to be noted that, in the case of no conflict, the features in the embodiments and the embodiments in the invention may be arbitrarily combined with each other.

It is to be noted that terms "first", "second" and the like in the specification, claims and drawings of the invention are used to distinguish similar objects and not necessarily to describe a specific order or sequence.

### First embodiment

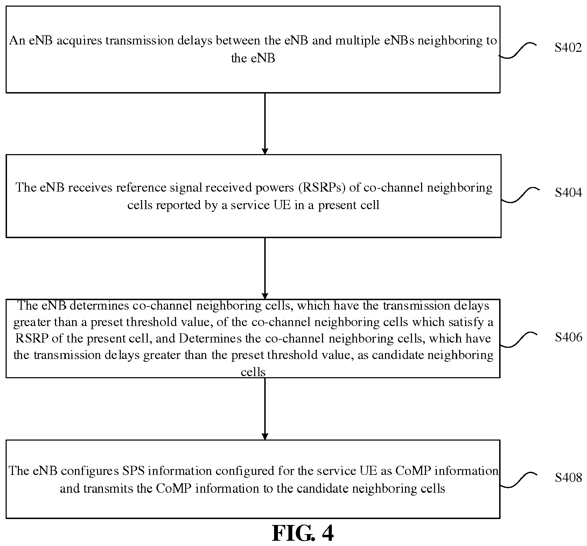

The embodiment provides a method for cancelling co-channel interference. FIG. 4 is a flowchart of a method for cancelling co-channel interference according to an embodiment of the invention. As illustrated in FIG. 4, the flow includes the following operations.

In S402, an eNB acquires transmission delays between the eNB and multiple eNBs adjacent to the eNB.

In S404, the eNB receives RSRPs of co-channel neighboring cells reported by service UE in a present cell.

In S406, the eNB determines co-channel neighboring cells, which have the transmission delays greater than a preset threshold value, of the co-channel neighboring cells which satisfy a RSRP of the present cell, are determined, and the co-channel neighboring cells, which have the transmission delays greater than the preset threshold value, are determined as candidate neighboring cells.

In S408, the eNB configures SPS information configured for the service UE as CoMP information and transmits the CoMP information to the candidate neighboring cells.

Herein, the SPS information is used to indicate the candidate neighboring cells to periodically stop scheduling in a specified resource.

It can be seen from the above S402 to S408 of the embodiment that, the SPS information is transmitted to the candidate neighboring cells in a CoMP manner. The candidate neighboring cells are neighboring cells which have co-channel interference with a present eNB, satisfy the RSRP of the present eNB and have the transmission delays greater than the preset threshold value. That is, in the embodiment, when cancelling downlink co-channel interference by using a CoMP technology, it is also effective even not being based on highly real-time data transmission. The solution of adopting the CoMP technology in a long transmission delay (for example, greater than 10 ms) may be implemented by adjusting the preset threshold value, thereby solving the problem of absence of a method for cancelling downlink co-channel interference by use of the CoMP technology in an existing network in a long transmission delay in the related art, and achieving an effect of improving a user throughput and spectrum utilization of the whole network.

It is to be noted that, in the embodiment, the value 10 ms of the preset threshold value is a value in a preferred embodiment of the invention and not intended to limit the invention. A corresponding preset threshold value, for example, 15 ms, 20 ms and 8 ms, may be set according to practical conditions in other application scenes. It is the same to the following embodiments.

As an optional implementation of the embodiment, the operation, involved in S402 of the embodiment, that the eNB acquires the transmission delays between the eNB and the multiple eNBs adjacent to the eNB may be implemented in the following manners.

In a first manner, the eNB acquires preset transmission delays between the eNB and the multiple neighboring eNBs.

In a second manner, the eNB detects transmission delays between the eNB and the multiple eNBs adjacent to the eNB.

In another optional implementation of the embodiment, the operations, involved in S406 of the embodiment, that the eNB determines the co-channel neighboring cells, which have the transmission delays greater than the preset threshold value, of the co-channel neighboring cells which satisfy the RSRP of the present cell, and determines the co-channel neighboring cells, which have the transmission delays greater than the preset threshold value, as the candidate neighboring cells may include the following actions.

In S406-1, the eNB sorts the co-channel neighboring cells corresponding to the RSRPs according to the RSRPs reported by the service UE.

In S406-2, the eNB traverses the sorted co-channel neighboring cells and selects the co-channel neighboring cells with the transmission delays greater than a preset threshold value as the candidate neighboring cells.

In another optional implementation of the embodiment, the operations, involved in S408, that the eNB configures the SPS information configured for the service UE as the CoMP information and transmits the CoMP information to the candidate neighboring cells may include the following actions.

In S408-1, the eNB configures SPS information for the service UE, the SPS information including at least an RB activated by SPS, an activation moment of the SPS and a period of the SPS.

In S408-2, the eNB packs the SPS information and forms the CoMP information.

In S408-3, the eNB transmits the CoMP information to the candidate neighboring cells via a PTN.

Herein, SPS information is used to indicate the candidate neighboring cells to periodically stop, with the period, scheduling in the RB activated by the SPS from the activation moment.

According to the above descriptions of the implementations, those skilled in the art may clearly know that the method according to the abovementioned embodiments may be implemented by software and a necessary universal hardware platform, and of course, may also be implemented by hardware. However, in most cases, the former is a preferred embodiment. Based on such understanding, a part of the technical solution of the invention, which is essentially or makes a contribution to the related art, may be embodied in the form of a software product. The computer software product is stored in a storage medium (for example, a Read-Only Memory (ROM)/Random Access Memory (RAM), a magnetic disk and an optical disk), including several instructions to cause a terminal device (which may be a mobile phone, a computer, a server, a network device or the like) to execute the method in each embodiment of the invention.

### Second embodiment

The embodiment also provides a device for cancelling co-channel interference, which is configured to implement the abovementioned embodiment and preferred implementations. What has been described will not be described. As used below, a term "module" may implement a combination of software and/or hardware with a preset function. Although the device described in the following embodiment is preferably implemented by software, implementation by hardware or a combination of the software and the hardware is also possible and conceivable.

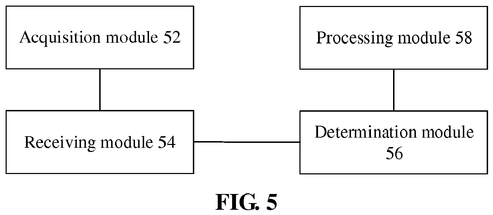

FIG. 5 is a structure block diagram of a device for cancelling co-channel interference according to an embodiment of the invention. The device is applied to an eNB side. As illustrated in FIG. 5, the device includes an acquisition module 52, a receiving module 54, a determination module 56 and a processing module 58. The acquisition module 52 is configured to acquire transmission delays between the eNb and multiple eNBs adjacent to an eNB. The receiving module 54 is coupled to the acquisition module 52 and configured to receive RSRPs of co-channel neighboring cells reported by a service UE in a present cell. The determination module 56 is coupled to the receiving module 54 and configured to determine co-channel neighboring cells, which have the transmission delays greater than a preset threshold value, of the co-channel neighboring cells which satisfy a RSRP of the present cell, and determine the co-channel neighboring cells, which have the transmission delays greater than the preset threshold value, as candidate neighboring cells. The processing module 58 is coupled to the determination module 56 and configured to configure SPS information configured for the service UE as CoMP information and transmit the CoMP information to the candidate neighboring cells, the SPS information being used to indicate the candidate neighboring cells to periodically stop scheduling in a specified resource.

Optionally, the acquisition module 52 may include an acquisition unit or a detection unit. The acquisition unit is configured to acquire preset transmission delays between the eNB and multiple neighboring eNBs. The detection unit is configured to detect transmission delays between the eNB and the multiple eNBs adjacent to the eNB.

Optionally, the determination module 56 includes a sorting unit and a determination unit. The sorting unit is configured to sort the co-channel neighboring cells corresponding to the RSRPs according to the RSRPs reported by the service UE. The determination unit is configured to traverse the sorted co-channel neighboring cells and select the co-channel neighboring cells with the transmission delays greater than a preset threshold value as candidate neighboring cells.

Optionally, the processing module 58 includes a configuration unit, a processing unit and a transmission unit. The configuration unit is configured to configure SPS information for the service UE, the SPS information including at least an RB activated by SPS, an activation moment of the SPS and a period of the SPS. The processing unit is configured to pack the SPS information and form the CoMP information. The transmission unit is configured to transmit the CoMP information to the candidate neighboring cells via a PTN, SPS being used to indicate the candidate neighboring cells to periodically stop, with the period, scheduling in the RB activated by the SPS from the activation moment.

It is to be noted that each of the abovementioned modules may be implemented by software or hardware. The latter may be implemented in, but not limited to, the following manner. All the abovementioned modules are located in the same processor or the modules are located in different processors in any combination respectively.

### Third embodiment

The embodiment provides a method for reducing downlink co-channel interference. In the embodiment, descriptions will be made by taking a voice service in downlink co-channel interference as an example. In addition, a long-delay CoMP processing technology involved in the embodiment will also be described by taking a transmission delay being greater than or equal to 10 ms as an example. The method in the embodiment includes the following operations.

In S502, a transmission delay of each CoMP neighboring cell or network is preset.

Herein, a network including eNBs as nodes is taken as an example. For example, transmission delays of transmission networks between the eNBs may be preset based on a pre-estimation result. Each eNB keeps delay setting records for itself and other related eNBs. Presetting may refer to manual setting and may also refer to automatic detection.

In S504, an eNB selects CoMP neighboring cells with a maximum delay and co-channel interference for a UE performing a voice over Internet protocol (VoIP) service.

Herein, it is determined whether the service UE reports channel quality of co-channel neighboring cells at first. When the channel quality of the co-channel neighboring cells is not reported, the flow is ended. When the channel quality of the co-channel neighboring cells is reported, the co-channel neighboring cells are sorted according to an interference degree in a descending order to form a candidate set of the CoMP neighboring cells.

The sorted co-channel neighboring cells are further traversed according to an interference degree. It is recorded whether the transmission delay of each of the neighboring cells is greater than TDELAY (a long delay threshold value: 10 ms) or not. When the transmission delay of the neighboring cell is greater than TDELAY, the neighboring cell is placed in a long-delay candidate neighboring cell set to form a final candidate set of long-delay CoMP neighboring cells.

In S506, the eNB transmits SPS information to the UE performing the VoIP service, packs and transmits the SPS related information to the above CoMP neighboring cells.

Herein, for the selected long-delay neighboring cell with optimal co-channel interference, CoMP processing is performed as follows.

At first, the eNB configures an attribute of SPS according to the service. An eNB side activates a downlink SPS technology for the service UE. A voice packet is continuously transmitted in the same resource in a present cell according to a period of SPS. Furthermore, the eNB packs the SPS information (including information such as an RB activated by SPS, an activation moment of the SPS and the period of SPS) for the UE to form CoMP information and transmits the CoMP information to a selected neighboring cell via a PTN. The neighboring cell, after receiving a coordination request from the serving cell, does not schedule other users in time-frequency resources according to an SPS periodic point, so as to avoid generating co-channel interference.

The embodiment will specifically be described below in combination with specific application scenes of the embodiment.

In a first application scene, taking an eNB as an example, an optimal interference cancellation neighboring cell is selected for interference cancellation.

Herein, there are an eNB1 (with a cell 1), an eNB2 (with a cell 2), an eNB3 (with a cell 3) and UE1. The cells 1, 2 and 3 are configured as neighboring cells.

Delays between the eNB1, the eNB2, the eNB3 and an eNB4 are measured in advance as follows: [eNB1-eNB2: 9 ms], [eNB1-eNB3: 12 ms] and [eNB2-eNB3: 10 ms].

In 10, transmission delays between a present eNB and neighboring eNBs are measured and configured for the present eNB. That is, each eNB presets the transmission delays between the eNB and other eNBs.

Herein, the eNB1 presets a delay T12 with the eNB2 to be 9(ms) and presets a delay T13 with the eNB3 to be 12(ms).

The eNB2 presets a delay T21 with the eNB1 to be 9(ms) and presets a delay T23 with the eNB3 to be 10(ms).

The eNB3 presets a delay T31 with the eNB1 to be 12(ms) and presets a delay T32 with the eNB2 to be 10(ms).

In 20, the UE1 initiates a VoLTE service in the cell 1 of the eNB1. For handover judgment, the eNB transmits A3 measurement to the UE.

In 30, the UE1, when moving to an edge of the cell 1, reports RSRPs of the present cell and multiple co-channel neighboring cells via A3.

Herein, it is obtained that a RSRP of the present cell (the cell 1) is -105 dbm, a RSRP of a neighboring cell (the cell 2) is -90 dbm and a RSRP of a neighboring cell (the cell 3) is -95 dbm.

In 40, a first order neighboring cell in which long-delay CoMP neighboring cells are concentrated is determined as an optimal interference cancellation neighboring cell.

All the co-channel neighboring cells reported by the UE are traversed, and RSRP difference values (RSRP of the neighboring cells minus RSRP of the present cell) between the neighboring cells and the present cell are calculated and sorted in a descending order to form a base set of the CoMP neighboring cells, as illustrated in Table 1.

**Table 1**

| Neighboring cell Identifier (ID) | RSRP difference value between the neighboring cell and the serving cell | Delay |
|---|---|---|
| Neighboring cell 2 | 15 | 9 ms |
| Neighboring cell 3 | 10 | 12 ms |

It can be seen from Table 1 that the base set of the CoMP neighboring cells includes the neighboring cell 2 and the neighboring cell 3.

In 50, all the co-channel neighboring cells reported by the UE are traversed, and RSRP difference values (RSRP of the neighboring cells minus RSRP of the present cell) between the neighboring cells and the present cell are calculated and sorted in a descending order to form the base set of the CoMP neighboring cells. In the example, the base set of CoMP neighboring cells is traversed, an eNB to which each neighboring cell belongs is queried, and a delay between the each neighboring cell and the present eNB is recorded. When the delay is greater than 10 ms, the neighboring cell is placed in the long-delay CoMP neighboring cell set.

It can be seen from the above table that the neighboring cell with a delay greater than 10 ms only includes the neighboring cell 3 and thus the neighboring cell 3 is the optimal long-delay CoMP neighboring cell.

In 60, the serving cell (the cell 1) activates an SPS technology for the service UE.

In 70, the cell 1 of the eNB1 packs downlink time-frequency resource information, a configuration period and the like of an SPS authorization transmitted to the UE1 to form the CoMP information, and transmits the CoMP information to the selected neighboring cell 3 via a transmission network. The downlink time-frequency resource information and the configuration period include information such as an RB activated by SPS, an activation moment of the SPS and a period of the SPS.

In 80, the neighboring cell 3, after receiving related authorization information about the SPS authorization for the UE1 from the cell 1, periodically stops scheduling its own data in a corresponding time-frequency resource.

By the operations of the above embodiment, a method for effectively using CoMP in a long-delay transmission network between eNBs is implemented, thereby co-channel interference is cancelled and a gain is acquired.

In a second application scene, taking an eNB as an example, multiple neighboring cells are selected for interference cancellation.

The second application scene is similar to the first application scene but there are more neighboring cells: an eNB4 (a cell 4) and an eNB5 (a cell 5). The cells 1, 2, 3, 4 and 5 are configured as a neighboring relationship.

Operations in the second application scene are the same as processing operations 10-40 of the first application scene. When the neighboring cell set obtained in S50 includes more than one cell (the neighboring cell 4 and the neighboring cell 5 are added) in the second application scene, the following operations are executed.

In 60, the cell 1 of the eNB1 packs the downlink time-frequency resource information, a configuration period and the like (including the information such as the RB activated by SPS, the activation moment of the SPS and the period of the SPS) of the SPS authorization transmitted to the UE1 to form the CoMP information, and transmits the CoMP information to the selected neighboring cells 3, 4 and 5 via the transmission network.

In 70, the neighboring cells 3, 4 and 5, after receiving the related authorization information about the SPS authorization for the UE1 from the cell 1, all periodically stop scheduling their own data in the corresponding time-frequency resource.

From the above, a method for effectively cancelling co-channel interference is proposed in the embodiment under the premise that the transmission delays between the neighboring cells are relatively long (greater than 10 ms), thereby solving the problem of co-channel interference for a downlink voice service in long-delay transmission networks in the related art, extending an application space of CoMP, and improving a user throughput and spectrum utilization of the whole network.

Apparently, those skilled in the art should know that modules or operations of the invention may be implemented by a universal computing device, and the modules or operations may be concentrated on a single computing device or distributed on a network formed by multiple computing devices. Optionally, the modules or operations may be implemented by program codes executable by the computing devices, so that the modules or operations may be stored in a storage device to be executed by the computing devices, the illustrated or described operations may be executed in sequences different from those described here in some circumstances, or may be made into each integrated circuit module respectively, or multiple modules or operations therein may be made into a single integrated circuit module for implementation. As a consequence, the invention is not limited to any specific combination of hardware and software.

The above is only the preferred embodiment of the invention and not intended to limit the invention. For those skilled in the art, the invention may have various modifications and variations. Any modifications, equivalent substitutions, improvements, and the like made within the spirit and principle of the invention shall fall within the scope of protection of the invention.

### INDUSTRIAL APPLICABILITY

In the embodiments of the invention, the SPS information is transmitted to the candidate neighboring cells in a CoMP manner. The candidate neighboring cells are neighboring cells which have co-channel interference with the present eNB, satisfy the RSRP of the present eNB and have the transmission delays greater than the preset threshold value. That is, when cancelling downlink co-channel interference by using a CoMP technology, it is also effective even not being based on highly real-time data transmission. The solution of adopting the CoMP technology in a long transmission delay may be implemented by adjusting the preset threshold value, thereby solving the problem of absence of a method for cancelling downlink co-channel interference by use of the CoMP technology in an existing network in a long transmission delay in the related art, and achieving an effect of improving a user throughput and spectrum utilization of the whole network.

## Claims

1. A method for cancelling co-channel interference, comprising:
acquiring, by an Evolved Node B, eNB, transmission delays between the eNB and a plurality of eNBs adjacent to the eNB;
receiving, by the eNB, reference signal received powers, RSRPs, of co-channel neighboring cells reported by a service user equipment, UE, in a present cell;
determining, by the eNB, co-channel neighboring cells, which have the transmission delays greater than a preset threshold value, of the co-channel neighboring cells which satisfy a RSRP of the present cell, and determining the co-channel neighboring cells, which have the transmission delays greater than the preset threshold value, as candidate neighboring cells; and
configuring, by the eNB, semi-persistent scheduling, SPS, information configured for the service UE as coordinated multi-point transmission or reception, CoMP, information, and transmitting the CoMP information to the candidate neighboring cells,
wherein the SPS information is used to indicate the candidate neighboring cells to periodically stop scheduling in a specified resource.

2. The method of claim 1, wherein acquiring, by the eNB, the transmission delays between the eNB and the plurality of eNBs adjacent to the eNB comprises:
acquiring, by the eNB, preset transmission delays between the eNB and the plurality of neighboring eNBs; or
detecting, by the eNB, the transmission delays between the eNB and the plurality of eNBs adjacent to the eNB.

3. The method of claim 1, wherein determining, by the eNB, the co-channel neighboring cells, which have the transmission delays greater than the preset threshold value, of the co-channel neighboring cells which satisfy the RSRP of the present cell, and determining the co-channel neighboring cells, which have the transmission delays greater than the preset threshold value, as the candidate neighboring cells comprise:
sorting, by the eNB, the co-channel neighboring cells corresponding to the RSRPs according to the RSRPs reported by the service UE; and
traversing, by the eNB, the sorted co-channel neighboring cells, and selecting the co-channel neighboring cells with the transmission delays greater than the preset threshold value as the candidate neighboring cells.

4. The method of claim 1, wherein, configuring, by the eNB, the SPS information configured for the service UE as the CoMP information and transmitting the CoMP information to the candidate neighboring cells comprise:
configuring, by the eNB, the SPS information for the service UE, the SPS information comprising at least a resource block, RB, activated by SPS, an activation moment of the SPS and a period of the SPS;
packing, by the eNB, the SPS information, and forming the CoMP information; and
transmitting, by the eNB, the CoMP information to the candidate neighboring cells via a packet transport network, PTN,
wherein the SPS is used to indicate the candidate neighboring cells to periodically stop, with the period, scheduling in the RB activated by the SPS from the activation moment.

5. The method of claim 1, wherein the preset threshold value is 10 ms.

6. A device for cancelling co-channel interference, applied to an Evolved Node B, eNB, side, comprising:
an acquisition module, configured to acquire transmission delays between the eNB and a plurality of eNBs adjacent to the eNB;
a receiving module, configured to receive reference signal received powers, RSRPs of co-channel neighboring cells reported by a service user equipment, UE, in a present cell;
a determination module, configured to determine co-channel neighboring cells, which have the transmission delays greater than a preset threshold value, of the co-channel neighboring cells which satisfy a RSRP of the present cell, and determine the co-channel neighboring cells, which have the transmission delays greater than the preset threshold value, as candidate neighboring cells; and
a processing module, configured to configure semi-persistent scheduling, SPS, information configured for the service UE as coordinated multi-point transmission or reception, CoMP, information, and transmit the CoMP information to the candidate neighboring cells,
wherein the SPS information is used to indicate the candidate neighboring cells to periodically stop scheduling in a specified resource.

7. The device of claim 6, wherein the acquisition module comprises:
an acquisition unit, configured to acquire preset transmission delays between the eNB and the plurality of neighboring eNBs; or
a detection unit, configured to detect the transmission delays between the eNB and the plurality of eNBs adjacent to the eNB.

8. The device of claim 6, wherein the determination module comprises:
a sorting unit, configured to sort the co-channel neighboring cells corresponding to the RSRPs according to the RSRPs reported by the service UE; and
a determination unit, configured to traverse the sorted co-channel neighboring cells and select the co-channel neighboring cells with the transmission delays greater than a preset threshold value as the candidate neighboring cells.

9. The device of claim 6, wherein the processing module comprises:
a configuration unit, configured to configure SPS information for the service UE, the SPS information comprising at least a resource block, RB, activated by SPS, an activation moment of the SPS and a period of the SPS;
a processing unit, configured to pack the SPS information and form CoMP information; and
a transmission unit, configured to transmit the CoMP information to the candidate neighboring cells via a packet transport network, PTN,
wherein SPS is used to indicate the candidate neighboring cells to periodically stop, with the period, scheduling in the RB activated by the SPS from the activation moment.

10. The device of claim 6, wherein the preset threshold value is 10 ms.
